# FASCICULE DE BREVET EUROPEEN

(11) **EP 1 894 785 B1**
(45) Date de publication et mention de la délivrance du brevet: **27.05.2009**
(21) Numéro de dépôt: 07290941.9
(22) Date de dépôt: 25.07.2007
(51) Int. Cl.: B60R 5/04

(54) **Cache bagages de véhicule automobile comprenant deux dispositifs d'enroulement articulés et un moyen de rappel élastique de ceux-ci**
Gepäckabdeckung für Kraftfahrzeug, die zwei mit Gelenken versehene Aufrollvorrichtungen und ein elastisches Rückholmittel für diese umfasst
Automobile luggage concealing device containing two articulated winding devices and an elastic means of recalling said devices

(30) Priorité: 01.09.2006 FR 0607719
(43) Date de publication de la demande: 05.03.2008
(73) Titulaire: Centre d'Etude et de Recherche pour l'Automobile (CERA), 51100 Reims (FR)
(72) Inventeur: Bayle, André-Xavier, 51100 Reims (FR)
(74) Mandataire: Sayettat, Julien Christian

(56) Documents cités:
- FR-A1- 2 845 957
- FR-A1- 2 873 339

## Description

L'invention concerne un cache bagages de véhicule automobile.

Il est connu, notamment du document FR-2 873 339, de réaliser un cache bagages de véhicule automobile, ledit cache bagages comprenant deux rideaux enroulables, selon un axe transversal, chacun dans un dispositif d'enroulement respectif, lesdits dispositifs d'enroulement étant associés l'un à l'autre par un dispositif d'association en articulation permettant audit cache bagages de passer réversiblement d'une configuration dépliée d'utilisation, où lesdits dispositifs d'enroulement sont disposés dans le prolongement axial l'un de l'autre, à une configuration repliée de rangement.

Dans l'agencement proposé, il est particulièrement difficile de faire en sorte que les rideaux soient contigus, voire se chevauchent légèrement, lorsqu'ils sont déroulés, ceci du fait de l'encombrement du dispositif d'association qui crée un écart entre les dispositifs d'enroulement. De ce fait, la fonction de masquage des bagages est imparfaitement remplie, un espace résiduel subsistant entre lesdits rideaux déroulés.

L'invention a pour but de pallier cet inconvénient.

A cet effet, l'invention propose un cache bagages de véhicule automobile, ledit cache bagages comprenant deux rideaux enroulables, selon un axe transversal, chacun dans un dispositif d'enroulement respectif, lesdits dispositifs d'enroulement étant associés l'un à l'autre par un dispositif d'association en articulation permettant audit cache bagages de passer réversiblement d'une configuration dépliée d'utilisation, où lesdits dispositifs d'enroulement sont disposés dans le prolongement axial l'un de l'autre, à une configuration repliée de rangement, ledit dispositif d'association comprenant un moyen de rappel élastique et un moyen de blocage en pliage desdits dispositifs d'enroulement entre eux, ledit moyen de rappel étant agencé de sorte à exercer en configuration d'utilisation un effort de rappel axial entre lesdits dispositifs d'enroulement et une activation dudit moyen de blocage, ledit moyen de rappel étant en outre agencé de sorte à permettre un débattement axial desdits dispositifs d'enroulement à l'encontre de l'effort de rappel et une désactivation dudit moyen de blocage libérant le passage à la configuration de rangement.

Par dispositif d'enroulement, on entend par exemple un ensemble comprenant une tige autour de laquelle s'enroule le rideau, un dispositif de mise en rotation de la tige dans le sens d'enroulement et un carter de protection. Bien entendu, d'autres types de dispositifs d'enroulement peuvent être prévus, par exemple qui ne comprennent pas de carter.

Avec l'agencement proposé, on peut réaliser une juxtaposition optimale entre les dispositifs d'enroulement en configuration d'utilisation, ce qui garantit que les rideaux soient contigus lorsqu'ils sont déroulés.

Dans cette description, les termes de positionnement dans l'espace (transversal,...) sont pris en référence au cache bagages disposé dans le véhicule.

D'autres particularités et avantages de l'invention apparaîtront dans la description qui suit, faite en référence aux figures jointes dans lesquelles :
- la figure 1 est une représentation schématique en coupe transversale partielle d'un cache bagages selon un mode de réalisation, le cache bagages étant en configuration dépliée d'utilisation,
- la figure 2 est une représentation analogue à celle de la figure 1, le cache bagages étant en configuration intermédiaire de repliement en vue de son rangement,
- la figure 3 est une représentation analogue à cette de la figure 1, le cache bagages étant en configuration repliée de rangement,

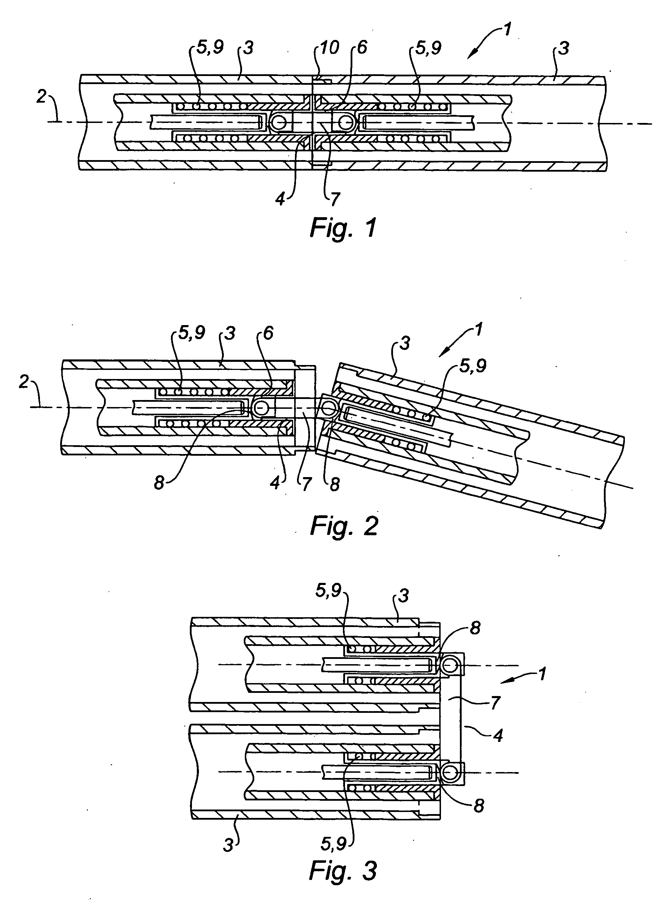

En référence aux figures, on décrit à présent un cache bagages 1 de véhicule automobile, ledit cache bagages comprenant deux rideaux enroulables, non représentés, selon un axe transversal 2, chacun dans un dispositif d'enroulement 3 respectif, lesdits dispositifs d'enroulement étant associés l'un à l'autre par un dispositif d'association 4 en articulation permettant audit cache bagages de passer réversiblement d'une configuration dépliée d'utilisation (figure 1), où lesdits dispositifs d'enroulement sont disposés dans le prolongement axial l'un de l'autre, à une configuration repliée de rangement (figure 3), ledit dispositif d'association comprenant un moyen de rappel 5 élastique et un moyen de blocage 6 en pliage desdits dispositifs d'enroulement entre eux, ledit moyen de rappel étant agencé de sorte à exercer en configuration d'utilisation un effort de rappel axial entre lesdits dispositifs d'enroulement et une activation dudit moyen de blocage, ledit moyen de rappel étant en outre agencé de sorte à permettre un débattement axial desdits dispositifs d'enroulement à l'encontre de l'effort de rappel et une désactivation dudit moyen de blocage libérant le passage à la configuration de rangement.

Selon la réalisation représentée, l'amplitude du débattement axial est définie, notamment par la longueur de la bielle 7 décrite ci-après, pour permettre une mise en place des dispositifs d'enroulement 3 selon des axes parallèles en configuration de rangement.

Selon la réalisation représentée, le dispositif d'association 4 comprend une bielle 7 de raccordement, les extrémités de ladite bielle étant reliées respectivement en rotation à des pièces de coulissement 8 axial disposées respectivement dans chaque dispositif d'enroulement 3, chacune desdites pièces de coulissement étant solidaire dudit dispositif d'enroulement correspondant par l'intermédiaire d'un organe de rappel 9 élastique, sous forme de ressort, lesdits organes formant moyen de rappel 5, de sorte que ladite bielle soit rétractée dans lesdits dispositifs d'enroulement en configuration d'utilisation pour former moyen de blocage 6.

Selon la réalisation représentée, les dispositifs d'enroulement 3 sont respectivement agencés de sorte à pouvoir s'emboîter l'un dans l'autre en configuration d'utilisation pour former moyen de blocage complémentaire 10.

En variante de réalisation non représentée, le moyen de rappel 5 est formé d'un organe de rappel élastique, dont chaque extrémité est respectivement associée à chaque dispositif d'enroulement 3, lesdits dispositifs d'enroulement étant respectivement agencés de sorte à pouvoir s'emboîter l'un dans l'autre en configuration d'utilisation pour former moyen de blocage 10.

De façon non représentée, le cache bagages 1 peut comprendre en outre un moyen de verrouillage réversible dans la configuration d'utilisation et/ou dans la configuration de rangement.

## Revendications

1. Cache bagages (1) de véhicule automobile, ledit cache bagages comprenant deux rideaux enroulables, selon un axe transversal (2), chacun dans un dispositif d'enroulement (3) respectif, lesdits dispositifs d'enroulement étant associés l'un à l'autre par un dispositif d'association (4) en articulation permettant audit cache bagages de passer réversiblement d'une configuration dépliée d'utilisation, où lesdits dispositifs d'enroulement sont disposés dans le prolongement axial l'un de l'autre, à une configuration repliée de rangement, ledit cache bagages étant **caractérisé en ce que** ledit dispositif d'association comprend un moyen de rappel (5) élastique et un moyen de blocage (6) en pliage desdits dispositifs d'enroulement entre eux, ledit moyen de rappel étant agencé de sorte à exercer en configuration d'utilisation un effort de rappel axial entre lesdits dispositifs d'enroulement et une activation dudit moyen de blocage, ledit moyen de rappel étant en outre agencé de sorte à permettre un débattement axial desdits dispositifs d'enroulement à l'encontre de l'effort de rappel et une désactivation dudit moyen de blocage libérant le passage à la configuration de rangement.

2. Cache bagages selon la revendication 1, l'amplitude du débattement axial étant définie pour permettre une mise en place des dispositifs d'enroulement (3) selon des axes parallèles en configuration de rangement.

3. Cache bagages selon la revendication 1 ou 2, le dispositif d'association (4) comprenant une bielle (7) de raccordement, les extrémités de ladite bielle étant reliées respectivement en rotation à des pièces de coulissement (8) axial disposées respectivement dans chaque dispositif d'enroulement (3), chacune desdites pièces de coulissement étant solidaire dudit dispositif d'enroulement correspondant par l'intermédiaire d'un organe de rappel (9) élastique, lesdits organes formant moyen de rappel (5), de sorte que ladite bielle soit rétractée dans lesdits dispositifs d'enroulement en configuration d'utilisation pour former moyen de blocage (6).

4. Cache bagages selon l'une quelconque des revendications 1 à 3, les dispositifs d'enroulement (3) étant respectivement agencés de sorte à pouvoir s'emboîter l'un dans l'autre en configuration d'utilisation pour former moyen de blocage complémentaire (10).

5. Cache bagages selon la revendication 1 ou 2, le moyen de rappel (5) étant formé d'un organe de rappel élastique, dont chaque extrémité est respectivement associée à chaque dispositif d'enroulement (3), lesdits dispositifs d'enroulement étant respectivement agencés de sorte à pouvoir s'emboîter l'un dans l'autre en configuration d'utilisation pour former moyen de blocage (10).

6. Cache bagages selon l'une quelconque des revendications 1 à 5, ledit cache bagages comprenant en outre un moyen de verrouillage réversible dans la configuration d'utilisation.

7. Cache bagages selon l'une quelconque des revendications 1 à 6, ledit cache bagages comprenant en outre un moyen de verrouillage réversible dans la configuration de rangement.

## Claims

1. Automobile luggage concealing device (1), said luggage concealing device comprising two windable curtains, according to a transversal axis (2), each one in a respective winding device (3), said winding devices being associated to one another by an articulated association device (4) allowing said luggage concealing device to reversible pass from an unfolded configuration of use, wherein said winding devices are arranged in the axial extension in relation to one another, to a folded configuration of storage, said luggage concealing device being **characterised in that** said association device comprises an elastic means of recalling (5) and a means of blocking (6) by folding of said winding devices between themselves, said means of recalling being arranged in such a way as to exert in configuration of use an axial return effort between said winding devices and an activation of said means of blocking, said means of recalling being furthermore arranged in such a way as to allow an axial displacement of said winding devices against the return effort and a deactivation of said means of blocking releasing the passage to the storage configuration.

2. Luggage concealing device set forth in claim 1, the amplitude of the axial displacement being defined in order to allow for a setting up of the winding devices (3) according to parallel axes in storage configuration.

3. Luggage concealing device set forth in claim 1 or 2, the association devices (4) comprising a connecting rod (7), the ends of said rod being respectively connected in rotation to axial sliding parts (8) arranged respectively in each winding device (3), each one of the sliding parts being connected to said corresponding winding device by the intermediary of an elastic recalling element(9), said elements forming a means of recalling (5), in such a way that said rod is retracted in said winding devices in configuration of use to form the means of blocking (6).

4. Luggage concealing device as set forth in any of claims 1 to 3, the winding devices (3) being respectively arranged in such a way as to be able to nest one into the other in the configuration of use to form the additional means of blocking (10).

5. Luggage concealing device set forth in claim 1 or 2, the means of recalling (5) being formed of an elastic recalling element, of which each end is respectively associated to each winding device (3), said winding devices being respectively arranged in such a way as to be able to nest one into the other in configuration of use to form the means of blocking (10).

6. Luggage concealing device as set forth in any of claims 1 to 5, said luggage concealing device further comprising a reversible means of locking in the configuration of use.

7. Luggage concealing device as set forth in any of claims 1 to 6, said luggage concealing device further comprising a reversible means of locking in the storage configuration.

## Patentansprüche

1. Gepäckabdeckung (1) für Kraftfahrzeuge, wobei die Gepäckabdeckung zwei an einer Querachse (2) entlang aufrollbare Vorhänge umfasst, die sich jeder in einer entsprechenden Aufrollvorrichtung (3) befinden, wobei die Aufrollvorrichtungen über eine Verknüpfungsvorrichtung (4) gelenkig miteinander verknüpft sind, die es der Gepäckabdeckung ermöglicht, umkehrbar von einer aufgefalteten Gebrauchskonfiguration, in der die Aufrollvorrichtungen miteinander in der Axialverlängerung angeordnet sind, in eine zusammengefaltete verstaute Konfiguration überzugehen, wobei die Gepäckabdeckung **dadurch gekennzeichnet ist, dass** die Verknüpfungsvorrichtung ein elastisches Rückstellmittel (5) und ein Mittel (6) zum Feststellen der Faltung der Aufrollvorrichtungen untereinander umfasst, wobei das Rückstellmittel derart angeordnet ist, dass es in der Gebrauchskonfiguration eine axiale Rückstellkraft zwischen den Aufrollvorrichtungen und eine Aktivierung des Feststellmittels bewirkt, wobei das Rückstellmittel ferner derart angeordnet ist, dass es eine Axialausfederung der Aufrollvorrichtungen gegen die Rückstellkraft und eine Deaktivierung des Feststellmittels, die den Übergang in die verstaute Konfiguration freigibt, ermöglicht.

2. Gepäckabdeckung nach Anspruch 1, wobei die Amplitude der Axialausfederung definiert ist, damit die Aufrollvorrichtungen (3) entlang den parallelen Achsen in der verstaute Konfiguration eingesetzt werden können.

3. Gepäckabdeckung nach Anspruch 1 oder 2, wobei die Verknüpfungsvorrichtung (4) eine Verbindungsstange (7) umfasst, wobei die Enden der Stange jeweils drehbar mit Axialgleitstücken (8) verbunden sind, die jeweils in jeder Aufrollvorrichtung (3) angeordnet sind, wobei jedes der Gleitstücke mit der entsprechenden Aufrollvorrichtung über ein elastisches Rückstellorgan (9) fest verbunden ist, wobei die Organe ein Rückstellmittel (5) bilden, so dass die Stange in der Gebrauchskonfiguration in die Aufrollvorrichtungen zurückgezogen wird, um ein Feststellmittel (6) zu bilden.

4. Gepäckabdeckung nach einem der Ansprüche 1 bis 3, wobei die Aufrollvorrichtungen (3) jeweils derart angeordnet sind, dass sie in der Gebrauchskonfiguration ineinander einsteckbar sind, um ein zusätzliches Feststellmittel (10) zu bilden.

5. Gepäckabdeckung nach Anspruch 1 oder 2, wobei das Rückstellmittel (5) von einem elastischen Rückstellorgan gebildet wird, von dem jedes Ende jeweils mit jeder Aufrollvorrichtung (3) verbunden ist, wobei die Aufrollvorrichtungen jeweils derart angeordnet sind, dass sie in der Gebrauchskonfiguration ineinander einsteckbar sind, um ein Feststellmittel (10) zu bilden.

6. Gepäckabdeckung nach einem der Ansprüche 1 bis 5, wobei die Gepäckabdeckung ferner ein Mittel zur umkehrbaren Verriegelung in der Gebrauchskonfiguration umfasst.

7. Gepäckabdeckung nach einem der Ansprüche 1 bis 6, wobei die Gepäckabdeckung ferner ein Mittel zur umkehrbaren Verriegelung in der verstauten Konfiguration umfasst.
